# FASCICULE DE BREVET EUROPEEN

(11) **EP 1 300 743 B1**
(45) Date de publication et mention de la délivrance du brevet: **03.05.2006**
(21) Numéro de dépôt: 02292261.1
(22) Date de dépôt: 16.09.2002
(51) Int. Cl.: G05F 1/571, G05F 1/573

(54) **Dispositif de protection d'une source de tension et d'une charge alimentée par la source de tension**
Schutzanordnung für eine Spannungsquelle und eine über eine Spannuungsquelle gespeisten Last
Protection device for a voltage source and a load supplied by the voltage source

(30) Priorité: 03.10.2001 FR 0112724
(43) Date de publication de la demande: 09.04.2003
(73) Titulaire: AGENCE SPATIALE EUROPEENNE, 75735 Paris (FR)
(72) Inventeur: Simonelli, Giulio, 2341 SP Oegtgeest (NL); Perol, Philippe Alfred, 2596 PD Den Haag (NL)
(74) Mandataire: de Roquemaurel, Bruno

(56) Documents cités:
- US-A- 4 536 699
- US-A- 4 972 136

## Description

La présente invention concerne un dispositif de protection d'une source de tension et d'une charge alimentée par cette source.

Elle s'applique notamment, mais non exclusivement, aux systèmes de distribution d'électricité dans lesquels il est difficile, voire impossible de contrôler les caractéristiques d'impédance de bus et de charge. Elle s'applique plus généralement à tous les systèmes utilisant du courant continu, tels que l'automobile (42 V), les télécommunications (48 V), les engins spatiaux et en particulier la station spatiale internationale ISS.

On a déjà proposé des circuits de protection, mais en général ces circuits présentent une fonction spécifique. Ainsi, il existe des circuits limiteurs de courant ou de protection contre les surintensités, des circuits limiteurs de puissance, des circuits de suppression de pics de courant, et des circuits de protection contre les surtensions.

Les circuits de protection contre les surintensités sont généralement constitués par un élément de commutation tel qu'un MOSFET (Metal Oxide Semiconductor Field-Effect Transistor) associé à un dispositif de mesure de courant. Lorsque l'intensité du courant atteint une certaine valeur de seuil, l'élément de commutation est commandé de manière à maintenir l'intensité du courant à cette valeur de seuil ou à une valeur inférieure, ce qui a pour effet d'induire une différence de potentiel aux bornes de l'élément de commutation et donc de réduire la tension appliquée à la charge et par conséquent le courant. A cet effet, l'élément de commutation doit être placé dans un mode de fonctionnement sensiblement linéaire (par opposition au mode saturé dans lequel il se trouve lorsqu'il est utilisé comme élément de commutation pur). Il en résulte qu'il doit dissiper de la puissance qui est proportionnelle au produit de l'intensité par la tension qui lui sont appliquées. Or la capacité de l'élément de commutation pour dissiper de la puissance est limitée, et l'élément de commutation doit être rapidement mis hors tension pour ne pas se détériorer.

Ainsi, la capacité à limiter le courant des limiteurs de courant est toujours associée à une capacité en temps de fonctionnement en mode linéaire qui est de courte durée, de l'ordre de quelques millisecondes.
Dans un système de distribution complexe, les charges peuvent être de toute sorte et le commutateur de commande de la charge peut être à la fois éloigné de la source et de la charge (c'est le cas dans la station spatiale internationale). Si le commutateur est utilisé à la manière d'un relais à l'état ouvert ou fermé, une telle commande ne pose pas de problème de stabilité. Par contre, si le commutateur est utilisé en mode linéaire pour contrôler le courant maximum (comme c'est le cas d'un limiteur de courant), de sérieux problèmes de stabilité peuvent apparaître. Généralement, de tels problèmes de stabilité sont résolus en limitant la largeur de bande de la boucle de courant, ce qui augmente le temps de réponse, ou en insérant une impédance connue et contrôlée avant et après le limiteur de courant, ce qui nécessite des condensateurs et des circuits d'amortissement, qui augmentent l'encombrement d'un tel dispositif.
Enfin, un tel circuit de protection contre les surintensités nécessite d'être protégé contre les surtensions qui peuvent le détériorer à la suite d'un déclenchement du circuit vers l'état ouvert pour protéger la charge (protection du circuit à l'état ouvert).

Les documents US 4 972 136 et US 4 536 699 décrivent des régulateurs de tension comportant un transistor à effet de champ (FET) fonctionnant en mode linéaire.

Les circuits de protection contre les surtensions les plus efficaces (adaptés aux charges ne tolérant aucune surtension) sont ceux qui agissent en mettant la source de tension en court-circuit à l'aide d'un thyristor, et ainsi transforment la surtension en surintensité. De tels circuits nécessitent donc un circuit de protection contre les surintensités qui présente les inconvénients précités.
En outre, une telle protection est bien adaptée aux surtensions résultant de pannes. Par contre, dans les systèmes de distribution complexes, de telles surtensions peuvent apparaître dans une situation normale et donc ne doivent pas déclencher le circuit de protection.

Les circuits de suppression de pics de tension comprennent généralement un circuit d'amortissement RC ou des diodes Zener, ou encore des diodes appelées "transorb" qui ont la capacité d'absorber une quantité d'énergie en avalanche, et ainsi de limiter la tension avec une certaine précision, de l'ordre de +/- 10% de leur tension Zener.

De tels circuits doivent en tout état de cause absorber l'énergie du pic et rabaisser la tension à un niveau de sécurité, mais doivent également être compatibles avec les surtensions et les phénomènes transitoires susceptibles d'apparaître dans le système à protéger. Il s'avère que dans les systèmes complexes de distribution d'électricité, il est presque impossible d'assurer ces deux fonctions d'une manière fiable par des moyens conventionnels.

Les circuits de limitation de puissance sont conçus pour mesurer la tension et l'intensité du courant appliqué à la charge, et commandent un élément de commutation d'alimentation (comme pour les limiteurs de courant) de manière à maintenir le produit tension par intensité constant. Il s'avère qu'une telle régulation en fonction du produit tension par intensité est complexe à réaliser.

On a également proposé des circuits d'amortissement du facteur de qualité (facteur Q). Lorsque l'impédance du circuit regroupant le bus d'alimentation et la charge présente un facteur Q élevé, on peut observer des oscillations qui se produisent lors de surtensions transitoires au niveau de la source ou de surintensités transitoires au niveau de la charge. Pour supprimer de telles oscillations, il est connu d'utiliser une capacité d'amortissement élevée qui est nécessairement de volume et de masse importants. Une telle capacité n'est donc pas adaptée aux engins spatiaux.

D'une manière générale, les circuits de l'art antérieur peuvent ne pas supporter certaines surtensions inférieures à celles qui les déclenchent à la coupure. En outre, leur fonctionnement dépend des caractéristiques de la source et de l'impédance de la charge.

La présente invention a pour but de supprimer ces inconvénients, et en particulier de proposer un dispositif de protection qui soit adapté à n'importe quel type de charge, tout en présentant un faible encombrement et des pertes limitées, tant du côté de la charge que du côté de la source d'alimentation. Cet objectif est atteint par la prévision d'un dispositif de protection d'une source de tension et d'une charge alimentée par la source de tension, comprenant un élément de commutation interposé entre la source de tension et la charge et associé à un circuit de limitation de courant comportant un organe de mesure du courant délivré par la source et un organe de commande pour commander l'élément de commutation pour qu'il empêche le courant de dépasser un seuil de courant prédéfini.

Selon l'invention, ce dispositif comprend en outre un circuit de limitation de tension conçu pour commander l'élément de commutation pour qu'il empêche la tension délivrée à la charge de dépasser un seuil de tension prédéfini.

Le dispositif de protection selon l'invention peut être inséré à tout endroit entre la source et la charge, et agit de façon transparente sans affecter les fonctionalités de la charge en régime nominal.

Avantageusement, le circuit de limitation de tension comprend des moyens de détection des variations de tension en sortie du dispositif qui sont rebouclées sur l'organe de commande du circuit de limitation de courant, de manière à assurer également des fonctions de stabilisation d'impédance, d'amortissement de facteur de qualité et d'adaptation d'impédance entre la source de tension et la charge.

Selon un mode de réalisation préféré de l'invention, l'élément de commutation comprend un transistor de type MOSFET monté en série sur la ligne positive du bus d'alimentation reliant la source de tension à la charge, et dont la grille est alimentée par l'organe de commande qui agit sur le transistor à la manière d'une source de courant.

De préférence, le transistor est maintenu en mode linéaire pour empêcher le courant et la tension appliqués à la charge de dépasser les seuils prédéfinis, le dispositif comprenant en outre un circuit de déclenchement pour mettre hors tension le transistor après une certaine durée de fonctionnement en mode linéaire.

Selon un mode de réalisation préféré de l'invention, organe de commande du circuit de limitation de courant comprend un amplificateur pour amplifier la mesure du courant délivré par la source et commander l'élément de commutation, et en ce que le circuit de limitation de tension est relié à amplificateur pour commander l'élément de commutation en cas de surtension.

Selon un mode de réalisation préféré de l'invention, le circuit de limitation de tension comprend une diode Zener montée de manière à fixer la tension appliquée à la charge à une valeur prédéterminée au début d'une surtension, le circuit de limitation de tension commandant élément de commutation pour prendre le relais de la diode Zener et limiter la tension durant la fin de la surtension.

Selon un mode de réalisation préféré de l'invention, le circuit de limitation de tension comprend une diode Zener montée de manière à absorber la majeure partie des surtensions appliquées par la source, tandis que l'élément de commutation est commandé par le circuit de limitation de tension pour qu'il passe en mode linéaire.

Selon un mode de réalisation préféré de l'invention, le transistor est choisi de manière à présenter des capacités parasites grille - source et grille - drain suffisantes pour qu'en cas de pointe d'énergie, le transistor soit commandé pour passer en mode linéaire grâce au courant injecté dans les capacités parasites.

Selon un mode de réalisation préféré de l'invention, le dispositif comprend en outre un circuit de limitation de puissance conçu pour commander l'élément de commutation pour empêcher la puissance délivrée par la source de dépasser un seuil de puissance prédéfini pendant une durée excédant une certaine valeur.

Un mode de réalisation préféré de invention sera décrit ci-après, à titre d'exemple non limitatif, avec référence aux dessins annexés dans lesquels
La figure 1 représente un circuit d'alimentation intégrant un dispositif de protection selon l'invention ;
La figure 2 représente d'une manière plus détaillée le dispositif de protection représenté sur la figure 1 ;
Les figures 3 et 4 montrent en détail des exemples de réalisation de deux parties du dispositif représenté sur la figure 2 ;
Les figures 5 à 8 illustrent sous la forme de courbes le fonctionnement du dispositif de protection selon l'invention.

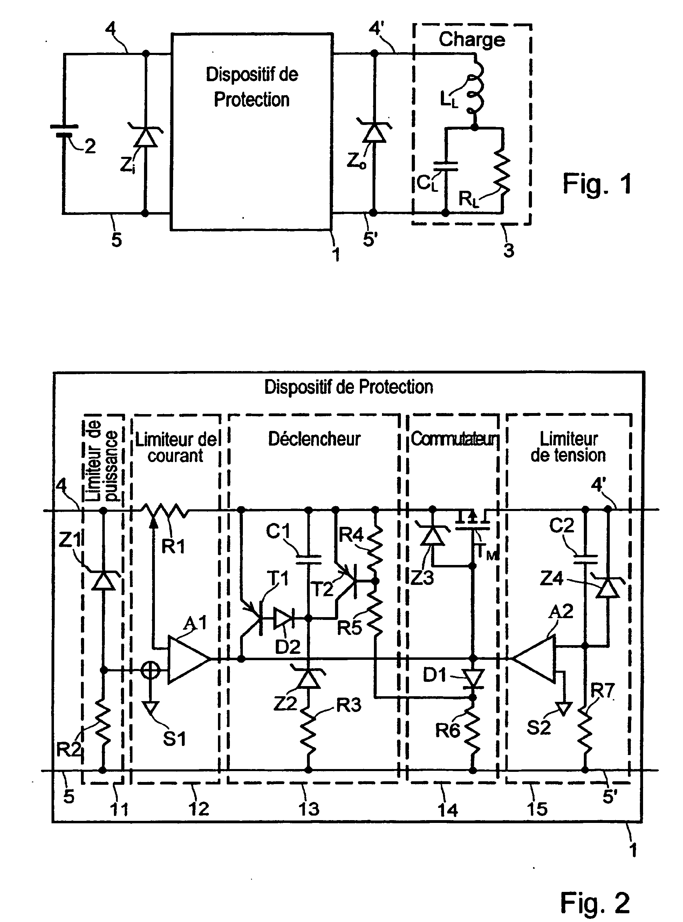

La figure 1 représente un dispositif de protection conçu selon l'invention autour d'un unique élément de commutation, et destiné à être interposé sur un bus d'alimentation en courant continu reliant une source de tension 2 à une charge 3. La charge 3 peut être modélisée par une inductance L_{L} montée en série avec une résistance R_{L} en parallèle avec un condensateur C_{L}. Le bus comprend un tronçon de bus 4, 5 reliant la source de tension 2 au dispositif 1 et un tronçon 4', 5' reliant le dispositif 1 à la charge 3, chaque tronçon étant constitué d'une ligne d'alimentation positive 4, 4' et d'une ligne d'alimentation négative 5, 5'.

Le bus d'alimentation peut présenter de façon naturelle une impédance série résistive et inductive et une faible capacité.

On peut prévoir de disposer une diode Zener Zᵢ d'entrée entre la source de tension 2 et le dispositif de protection 1 et une diode Zener Zₒ de sortie entre le dispositif de protection et la charge 3. La diode Zᵢ de suppression des transitoires de tension permet d'une part de replacer en dissipant l'énergie stockée dans le circuit l'inductance de ligne à la tension maximum admissible par l'élément de commutation du dispositif de protection 1. D'autre part, cette diode permet grâce à sa faible impédance de convertir le courant des pics d'énergie en tension, de manière à permettre au dispositif de protection 1 de réguler la tension appliquée à la charge 3.

La diode Zener Zₒ permet de fixer si nécessaire la tension à une valeur admissible par la charge, jusqu'à ce que l'élément de commutation du dispositif de protection 1 réagisse pour limiter la tension. Cette diode Zener peut être remplacée par une diode de roue libre.

Sur la figure 2, le dispositif de protection 1 comprend successivement, en partant de la source de tension :
- un circuit 11 de limitation de puissance,
- un circuit 12 de limitation de courant ou de protection contre les surintensités,
- un circuit 13 de déclenchement de la coupure,
- un circuit 14 de commutation, et
- un circuit 15 de limitation en tension ou de protection contre les surtensions, assurant également une fonction de stabilisation d'impédance.

Selon l'invention, la fonction de commutation des circuits de protection 11, 12 et 15 est assurée par le seul circuit de commutation 14 associé au circuit de déclenchement 13.

Le circuit de commutation 14 est conçu autour d'un transistor T_{M} de type MOSFET à canal P dont le drain et la source sont montés en série sur la ligne d'alimentation positive 4, 4', et dont la grille est alimentée au travers d'une diode Zener Z3 dont la borne indirecte est reliée à la ligne d'alimentation 4. Par ailleurs, la grille du transistor T_{M} est reliée à la ligne d'alimentation 5' par l'intermédiaire d'une diode D1 montée en direct, en série avec une résistance R4. La valeur de la résistance R4 est choisie suffisamment élevée pour que le transistor T_{M} passe en mode de saturation, dès qu'une tension suffisante est appliquée entre les lignes 4 et 5. Une valeur de résistance R4 élevée permet également de limiter la consommation d'énergie du dispositif.

Le circuit 11 de limitation de puissance comprend une diode Zener Z1 en série avec une résistance R2, l'ensemble étant monté en parallèle entre les lignes 4 et 5. Ce circuit est disposé en entrée du dispositif pour contrôler la puissance d'entrée, seul ce contrôle de puissance étant nécessaire dans un système de distribution de puissance limitée. En fait, ce circuit permet de faire une approximation de la loi hyperbolique de puissance en fonction la tension et de l'intensité du courant par deux segments de droite et d'une portion courbe définie par la diode Zener Z1.
Si une puissance trop élevée est appliquée en entrée pendant trop longtemps, le circuit déclenche la coupure par le circuit de commutation 13, de la même manière que le circuit 12 de limitation de courant ou de protection contre les surintensités.

Le circuit 12 de limitation de courant ou de protection contre les surintensités est conçu autour du circuit de commutation 13 et comprend un dispositif de mesure de courant qui commande ce dernier. Le circuit 12 est basé sur la caractéristique en tension de la diode Zener Z3 associée au transistor T_{M}, de manière à pouvoir combiner d'une manière simple la fonction de limitation de courant avec les autres fonctions de protection (limitation de tension et stabilisation d'impédance). Ce circuit comprend un amplificateur A1 dont une première entrée reçoit une tension fournie par une source de tension S1, à laquelle est ajoutée la tension au point de jonction entre la diode Zener Z1 et la résistance R2. La seconde entrée de l'amplificateur A1 reçoit une mesure d'intensité du courant traversant une résistance R1 montée en série sur la ligne 4, 4'. L'amplificateur A1 a pour fonction d'amplifier la mesure de courant aux bornes de la résistance R1 et de commander le commutateur 14 pour placer le transistor T_{M} en mode linéaire à partir d'un certain seuil afin de maintenir le courant dans la résistance R1 en dessous de ce seuil.

Lorsque le courant dans la résistance R1 augmente, la tension aux bornes de la diode Zener Z3 diminue jusqu'au point où cette tension devient insuffisante pour que la diode Z3 soit passante. Le transistor T_{M} passe alors en mode linéaire, ce qui réduit le courant dans la résistance R1.
La limite de courant dépend de la valeur de la résistance R1 qui est avantageusement ajustable.

Par rapport aux solutions de l'art antérieur, ce circuit présente une moins bonne précision sur la valeur exacte de la limitation de courant, mais est sensiblement plus simple et plus rapide.

Dans le circuit qui vient d'être décrit, toute l'électronique de contrôle est placée soit sur la ligne de retour (contrôle en tension), soit sur la ligne provenant de la source de tension (contrôle en courant), et agit sur l'élement de commutation (transistor T_{M}) comme une source de courant. Ces dispositions permettent de s'affranchir des effets des transitoires en mode commun qui pourraient être générés par la source.

Le circuit 15 assure à la fois une fonction de protection contre les surtensions et de suppression des pics, une fonction de stabilisation d'impédance et une fonction d'amortissement de facteur Q et d'adaptation d'impédance entre la source de tension et la charge.
Ces deux dernières fonctions sont en particulier assurées par un condensateur C2 et une résistance R7, montés en série entre les lignes 4 et 5, le point de jonction entre le condensateur C2 et la résistance R7 étant connecté à une entrée d'un amplificateur A2 dont l'autre entrée est connectée à une source de tension S2 et la sortie est reliée à la grille du transistor T_{M}. Ce circuit réagit aux variations positives de la tension entre les lignes 4, 4' et 5, 5' et amortit les oscillations qui ont tendance à apparaître en aval du transistor T_{M} sur la ligne 4'.
Si une variation négative de tension apparaît, elle est vue comme une surcharge qui est traitée par le circuit limiteur de courant 12. Par ailleurs, les oscillations sont éliminées puisque le transistor T_{M} passe en mode linéaire dès leur apparition pour amortir le facteur Q.

La fonction de limitation de tension et de suppression de pics est principalement assurée par une diode Zener Z4 montée en parallèle avec le condensateur C2. Cette diode Zener fonctionne en combinaison avec le transistor T_{M} pour bloquer les surtensions transitoires et limiter la tension appliquée à la charge. La tension limite est déterminée par la caractéristique en tension de la diode Zener Z4. En cas de pic d'énergie, la diode Z4 conduit. Il en résulte que la sortie de l'amplificateur A2 place le transistor T_{M} en mode linéaire, tandis que la diode Zener Z4 absorbe la majeure partie de l'énergie de la surtension. De cette manière, le transistor T_{M} ne subit le pic d'énergie que pendant un temps très court, bien inférieur à 10 µs.

La suppression de pics est réalisée par la combinaison du circuit réalisant la fonction de limitation de tension et de la diode Zener Zᵢ, également appelée diode "transorb", qui comprend une jonction pn ayant une faible impédance lors d'un claquage par avalanche. La diode transorb absorbe l'énergie du pic en convertissant le courant du pic en tension (mais ne bloque pas la tension à un niveau acceptable pour la charge). La tension fixée par la diode est sélectionnée en fonction de l'énergie à dissiper (et non en fonction de la tension maximum applicable à la charge comme dans l'art antérieur). Le dispositif de protection 1 ajuste donc la tension du bus à une valeur acceptable pour les composants du dispositif 1 situés en aval sur le bus 4', 5', pendant la suppression de pic. Dans le pire des cas, le dispositif de protection 1 n'a besoin d'absorber que la tension fixée par la diode transorb.
La combinaison de la diode transorb Zᵢ et du circuit 15 de limitation de tension permet ainsi de résoudre le problème de l'absorption des pics d'énergie, et d'une manière séparée, le problème de régulation de la tension appliquée à la charge.
En pratique, la diode transorb Zᵢ comprend plusieurs diodes transorb montées en série de manière à ne pas être sensible à la défaillance d'un composant.

Le circuit 13 de déclenchement de la coupure permet d'assurer que si le transistor T_{M} passe en mode linéaire à la suite d'une surtension ou d'une surintensité, cette situation ne se prolonge pas au delà de quelques millisecondes de manière à ne pas risquer d'endommager le transistor T_{M} qui dissipe l'énergie en excès en s'échauffant. Ce circuit a donc pour fonction de couper le transistor T_{M} après quelques millisecondes de fonctionnement en mode linéaire. Dans l'exemple de la figure 2, ce circuit comprend un transistor T1 de type pnp monté entre la ligne 4 et la sortie du circuit 12 de limitation de courant, la base de ce transistor étant connectée à la borne directe d'une diode D2. L'autre borne de la diode D2 est reliée d'une part à la ligne 4 par l'intermédiaire d'un condensateur C1 monté en parallèle entre le collecteur et l'émetteur d'un autre transistor T2 de type pnp, et d'autre part à la ligne 5 par l'intermédiaire d'une diode Zener Z2 montée en inverse, en série avec une résistance R3. La base du transistor T2 est reliée par l'intermédiaire d'une résistance R4 à la ligne 4, et par l'intermédiaire d'une résistance R5 au point de jonction entre la diode D1 et la résistance R6 du circuit de commutation 14.

Le condensateur C1 est chargé au travers de la diode Zener Z2 et de la résistance R3. En fonctionnement normal, c'est-à-dire en l'absence de surtension ou de surintensité, le condensateur C1 est court-circuité par le transistor T2 commandé au travers du pont diviseur constitué des résistances R4 et R5, par la diode Zener Z3 qui polarise sa jonction base - émetteur à plus de 1 Volt, assurant ainsi sa saturation. Lorsque le transistor T_{M} passe en mode linéaire à cause d'une surintensité, le transistor T2 passe en mode linéaire et le condensateur C1 se charge (à plus de 1 V). Le transistor T1 change alors d'état et agit comme une bascule de verrouillage en prenant l'état de la sortie du circuit 12 de protection contre les surintensités ou du circuit 15 de protection contre les surtensions, ce qui provoque le déchargement du condensateur C1. La constante de temps du circuit de décharge est définie par le produit de la capacité du condensateur et de la valeur de la résistance R3. Plus la tension d'entrée (sur la ligne 4) est élevée, plus la constante de temps doit être réduite en proportion de manière à maintenir constante la dissipation d'énergie dans le transistor T_{M}. De cette manière, le circuit 13 permet de contrôler l'énergie dissipée par le transistor T_{M}.

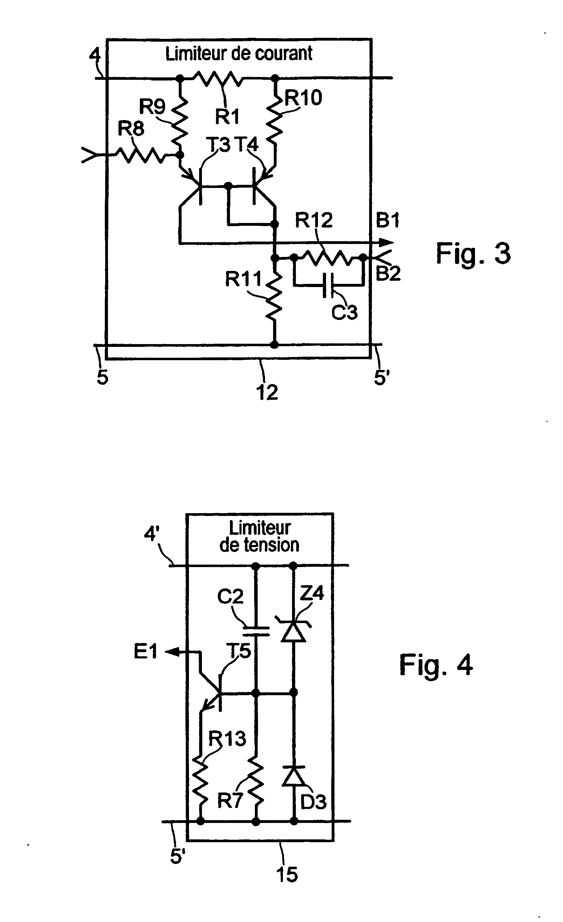

La figure 3 représente un exemple de réalisation du circuit limiteur de courant 12. Sur cette figure, le circuit 12 comprend deux transistors T3, T4 pnp montés en transistor double (les bases des deux transistors sont connectées l'une à l'autre), dont les collecteurs sont reliés respectivement aux deux bornes de la résistance R1 par l'intermédiaire de deux résistances R9, R10 respectives. Le collecteur du transistor T3 est en outre relié à l'entrée du circuit 12 par l'intermédiaire d'une résistance R8, cette entrée étant relié au point de jonction entre la diode Zener Z1 et la résistance R2. L'émetteur du transistor T3 est connectée à une sortie B1 du circuit 12. L'émetteur du transistor T4 est connecté à sa base, et relié à la ligne 5 par l'intermédiaire d'une résistance R11 de polarisation des deux transistors. L'émetteur du transistor T4 est également relié à une entrée B2 du circuit 12 par l'intermédiaire d'une résistance R12 montée en parallèle avec un condensateur C3 de découplage. La sortie B1 est destinée à être connectée à la grille du transistor T_{M}, tandis que la sortie B2 vient se raccorder à une entrée du circuit 15 de protection contre les surtensions.
Il en résulte que la résistance R6 connectée à la masse et reliée la grille du transistor T_{M} joue le rôle de résistance de polarisation du transistor T_{M}.

Lorsque le courant augmente dans la résistance R1 de mesure de courant, la tension base - émetteur du transistor T4 augmente. Le courant traversant la résistance R10 se trouve donc augmenté, ce qui abaisse d'autant le courant traversant la diode Zener Z3 et donc sa tension. Lorsque la tension aux bornes de la diode Zener devient inférieure à la tension Zener, le transistor T_{M} passe en mode linéaire, limitant ainsi le courant dans la résistance R1.

Si l'on souhaite obtenir une plus grande précision, il est préférable d'utiliser un transistor double (réalisé dans un composant unique) pour les transistors T3 et T4, plutôt que deux transistors séparés.

La figure 4 représente un exemple de réalisation du circuit 15 de protection contre les surtensions, et en particulier les fonctions de stabilisation d'impédance et d'amortissement de facteur Q de ce circuit. Ces fonctions sont simplifiées dans la mesure où elles reposent sur la détection des variations positives de la tension (celles qui sont le plus dangereux).
Ce circuit comprend un transistor T5 de type npn donc le collecteur est connecté à une sortie E1 du circuit 15 (connectée à l'entrée B2 du circuit 12), et l'émetteur est relié à une résistance de polarisation R13. La base de ce transistor est d'une part connectée au point de jonction entre le condensateur C2 et la diode Zener Z4, et d'autre part, reliée à la ligne 5 par l'intermédiaire de la résistance R7 et d'une diode D3 montée en inverse.
Ce circuit joue le même rôle qu'une grosse capacité connectée entre les lignes 4 et 5, les variations de tension générant un courant qui est amplifié par le circuit constitué des transistors T5, T3, T4 et des résistances en série.

En fait, le transistor T5 est monté en suiveur de tension pour amplifier le courant d'un facteur égal au rapport des valeurs des résistances R7 et R13. Le courant dans la base du transistor T5 est réfléchi dans le collecteur de celui-ci, ce qui crée un courant de base additionnel dans le transistor T4. Par un effet miroir, ce courant de base traverse le transistor T3 en étant amplifié d'un facteur d'amplification égal au rapport des valeurs des résistances R9 et R10, le courant amplifié commandant la grille du transistor T_{M}.

Il est à noter que les résistances R6 et R11 doivent être adaptées à la tension aux bornes des lignes 4 et 5, de manière à optimiser leur consommation résiduelle.

Dans le dispositif représenté sur la figure 2 dans lequel les circuits 12 et 15 sont ceux représentés sur les figures 3 et 4, les fonctions des amplificateurs A1 et A2 sont partiellement intégrées dans la mesure où la fonction de commande du transistor T_{M} est unique (sortie B1), le circuit 15 représenté sur la figure 4 n'effectuant qu'une amplification de la mesure de tension, laquelle est appliquée à l'entrée B2 du circuit 12 de la figure 3. En fait, la mesure de tension amplifiée en sortie E1 joue le rôle de tension de polarisation de l'amplificateur de courant et donc influe sur la commande du commutateur 14.

En outre, si l'on remplace la diode Zener Zₒ par une diode montée dans le même sens, la fonction de protection contre les surtensions et les pics d'énergie est réalisée d'une manière légèrement différente. En effet, dans ce cas, la diode Zener Z4 fixe simplement le niveau de tension d'une première partie de la surtension, et déclenche le transistor T_{M} qui après le temps de réaction de boucle de tension, régule la tension à une valeur inférieure à la tension Zener de la diode Z4. De cette manière, la diode Zener fixe la tension pendant quelques microsecondes, puis laisse le transistor T_{M} prendre le relais pour limiter la tension.

Grâce à ces dispositions, le dispositif de protection qui vient d'être décrit à titre d'exemple réalise un grand nombre de fonctions de protection avec un nombre de composants électroniques discrets réduit (31 composants) d'une manière importante par rapport aux dispositifs de l'art antérieur.

On peut remarquer que le dispositif selon l'invention présente, en plus de la fonction de limitation de puissance réalisée par le circuit 11, une caractéristique de limitation de puissance au carré, puisqu'il présente des fonctions séparées de limitation de courant et de limitation de tension et donc des limites en tension et en courant définies de manière indépendante. Pour reproduire la caractéristique de limite de puissance hyperbolique, il suffit de diminuer la limite de courant lorsque la tension dépasse sa valeur nominale.
La loi de variation de la limite de courant en fonction de la tension d'entrée est définie par deux segments de droite dont les caractéristiques dépendent de la diode Z1, de la résistance R2 et de la résistance entre le point de jonction entre Z1 et R2 et la grille du transistor T_{M}, c'est-à-dire de la résistance R8 dans l'exemple de la figure 3.

Par ailleurs, on peut remarquer que le dispositif selon l'invention peut se déclencher à la suite de pointes d'énergie, permettant ainsi de se protéger tout aussi bien que la charge, même si la diode transorb d'entrée Zᵢ est défaillante en circuit ouvert. Si une défaillance apparaît du côté de la charge, le dispositif continue d'isoler la charge même à la suite d'une pointe d'énergie.
Le transistor T_{M} choisi présente de préférence des capacités grille - source et grille - drain significatives. De cette manière, en cas de pointe d'énergie sur le bus 4, 5, le transistor T_{M} est commandé par la variation de la tension grâce au courant injecté dans ces capacités parasites. Il n'est pas nécessaire de maintenir la commande du commutateur à une impédance faible pour maintenir ce dernier à l'état ouvert à la suite du pic de tension. Au contraire, cette commande est volontairement conçue pour permettre une refermeture du circuit immédiatement après le transitoire tout en évitant la destruction du commutateur. La diode transorb Zᵢ est prévue pour limiter dans tous les cas les tensions transitoires appliquées à la charge.
Si le commutateur est à l'état ouvert avant le transitoire, cela signifie que la charge est défaillante puisque le commutateur est toujours à l'état fermé en l'absence de défaillance lorsque la tension de bus est présente. Dans cet état, tant que la protection est effective du point de vue du bus, des pointes d'énergie peuvent être injectées sans risque de générer le moindre dommage. Dans tous les cas, un redémarrage immédiat à la suite d'une pointe d'énergie permet d'amortir les oscillations qui peuvent résulter de cette pointe.

Le dispositif qui vient d'être décrit est insensible à la défaillance d'un composant dans la mesure où les lignes 4 et 5 ne sont jamais mises en court circuit dans le cas où un composant est défaillant.

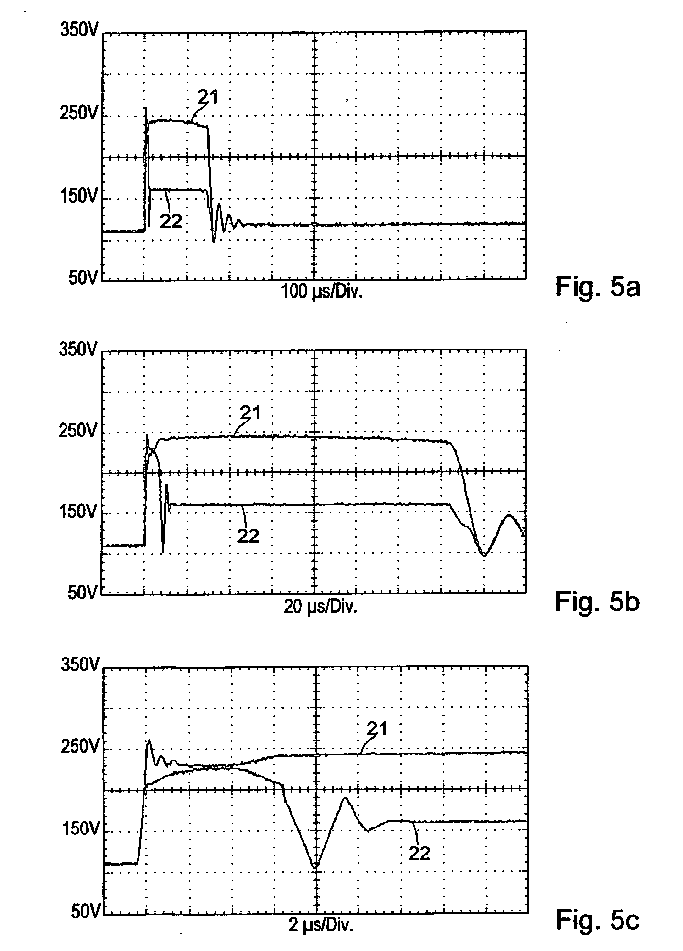

Les courbes des figures 5 à 8 illustrent les performances du dispositif 1 selon l'invention, connecté à différents types de charges 3, en réponse à une surtension inductive d'environ 200 mJ. Cette énergie est avantageusement absorbée par la diode transorb Zᵢ à 240 V.
Ces courbes ont été obtenues avec un dispositif conçu pour fonctionner avec une tension nominale d'alimentation de 120 V pour des puissances de charge inférieures à 200 W, avec une limite en courant d'entrée égale à 1,5 A pour une tension comprise entre 90 et 165 V, et pour éliminer une énergie inductive de 500 mJ maximum, avec une limite en tension côté charge de 170 V, et un temps de déclenchement de 1 à 2 ms en cas de surtension ou surintensité.

Pour obtenir de telles performances, les composants du dispositif 1 présentent par exemple les valeurs suivantes :

| | | | |
|---|---|---|---|
| Z3 : 11 V de tension Zener | R2 : 100 kΩ | R6: 60 kΩ | R10 : 225 Ω |
| C1 : 1 µF | R3 : 400 kΩ | R7 : 500 Ω | R11 : 120 kΩ |
| C2 : 0,1 nF | R4 : 30 kΩ | R8: 15kΩ | R12 : 30 kΩ |
| C3 : 100 pF | R5 : 250 kΩ | R9 : 105 Ω | R13 : 100 Ω |

Les courbes des figures 5a à 5c montrent à différentes échelles de temps les variations de tension en fonction du temps à l'entrée (courbe 21) et à la sortie (courbe 22) du dispositif 1 avec une charge résistive et inductive (R_{L} = 108 Ω, L_{L} = 5µH, et C_{L} = 0). Ces courbes font apparaître que le dispositif 1 réagit en environ 8 µs pour limiter la surtension de 240 V à environ 170 V pendant toute la durée de la surtension.

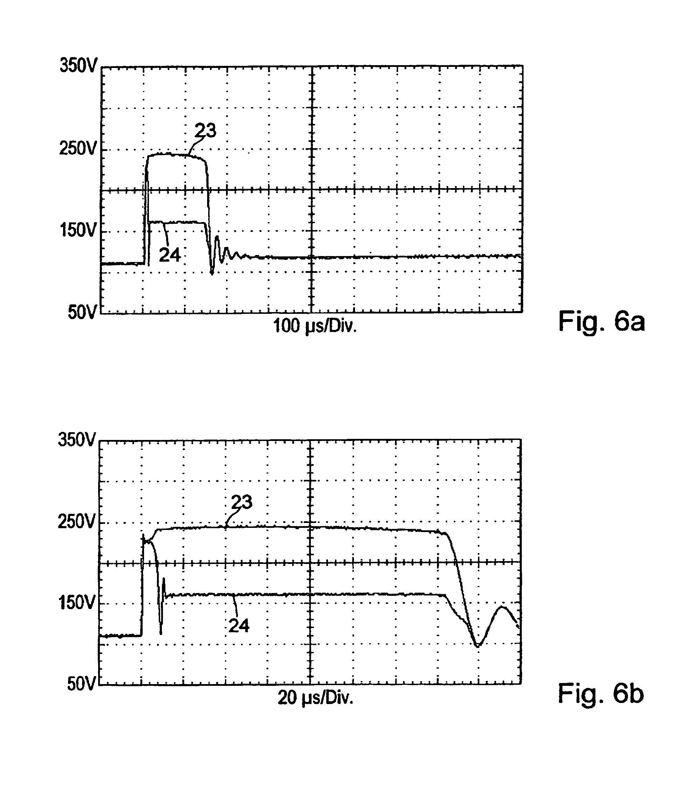

Les courbes des figures 6a et 6b montrent à différentes échelles de temps les variations de tension en fonction du temps à l'entrée (courbe 23) et à la sortie (courbe 24) du dispositif 1 avec une charge purement résistive (R_{L} = 108 Ω, L_{L} = 0, et C_{L} = 0). Ces courbes font apparaître que le dispositif selon l'invention d'une part empêche la tension en sortie de dépasser 170 V et réagit en 10 µs pour limiter la surtension à cette valeur. En particulier, la figure 6b montre que la tension est fixée à un niveau inférieur par la diode Zₒ pendant les premières 10 µs, puis la tension d'entrée est fixée par la diode Zᵢ qui élimine l'énergie stockée dans la ligne, tandis que la tension de sortie est régulée par le transistor T_{M} placé en mode linéaire, la diode Zₒ étant bloquée

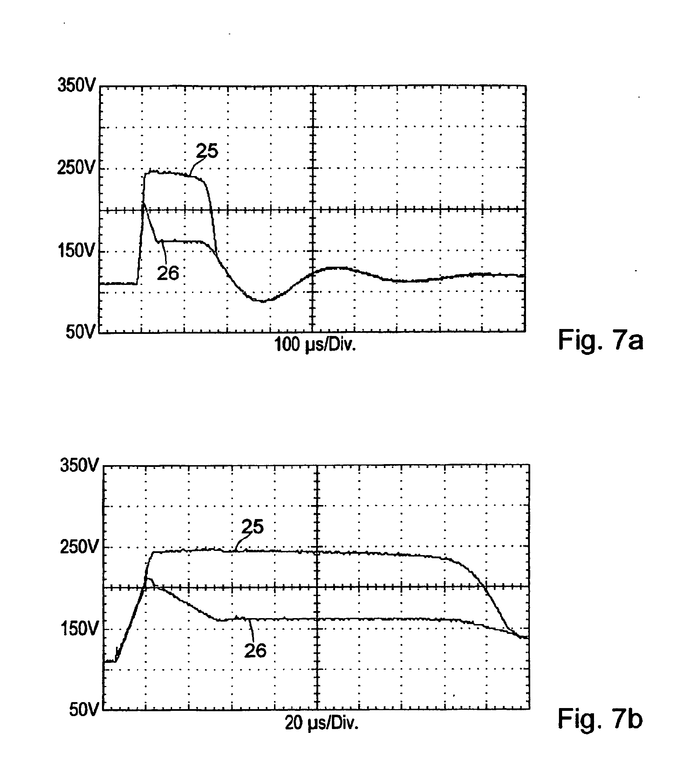

Tel que cela apparaît sur les figures 7a et 7b, le dispositif 1 empêche la tension appliquée à une charge 3 résistive et capacitive (R_{L} = 108 Ω, L_{L} = 0, et C_{L} = 1 µF) de dépasser la tension de la diode Zener en sortie, soit environ 180 V (courbe 26). Puis, cette tension est ramenée à 170 V environ 40 µs après le début de la surtension appliquée en entrée (courbe 25).

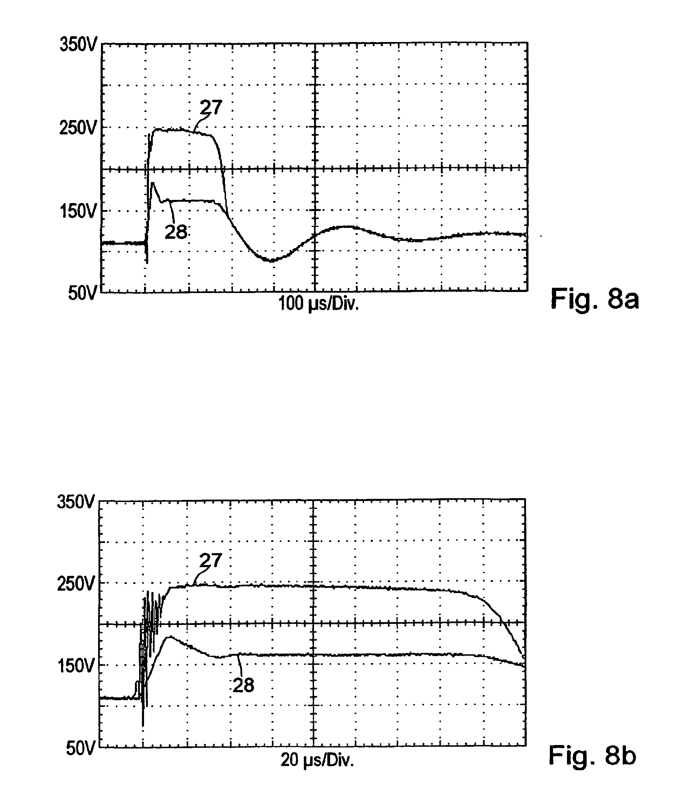

Sur les figures 8a et 8b montrent les variations de tension à l'entrée (courbe 27) et à la sortie (courbe 28) du dispositif 1 avec une charge résistive, inductive et capacitive (R_{L} = 180 Ω, L_{L} = 5 µH, et C_{L} = 1 µF).

## Revendications

1. Dispositif de protection (1) d'une source de tension (2) et d'une charge (3) alimentée par la source de tension, comprenant un élément de commutation (14) interposé entre la source de tension et la charge et associé à un circuit de limitation de courant (12) comportant un organe de mesure (R1) du courant délivré par la source et un organe de commande (A1) pour commander l'élément de commutation pour qu'il empêche le courant de dépasser un seuil de courant prédéfini,
**caractérisé en ce qu'**il comprend en outre un circuit de limitation de tension (15) conçu pour commander l'élément de commutation (14) pour qu'il empêche la tension délivrée à la charge (3) de dépasser un seuil de tension prédéfini.

2. Dispositif de protection selon la revendication 1,
**caractérisé en ce que** le circuit de limitation de tension (15) comprend des moyens de détection des variations de tension en sortie du dispositif qui sont rebouclées sur l'organe de commande (A1) du circuit de limitation de courant (12), de manière à assurer également des fonctions de stabilisation d'impédance, d'amortissement de facteur de qualité et d'adaptation d'impédance entre la source de tension et la charge.

3. Dispositif de protection selon la revendication 1 ou 2,
**caractérisé en ce que** l'élément de commutation (14) comprend un transistor de type MOSFET (T_{M}) monté en série sur la ligne positive (4) du bus d'alimentation reliant la source de tension (2) à la charge (3), et dont la grille est alimentée par l'organe de commande (A1) qui agit sur le transistor à la manière d'une source de courant.

4. Dispositif de protection selon la revendication 3,
**caractérisé en ce que** le transistor (T_{M}) est maintenu en mode linéaire pour empêcher le courant et la tension appliqués à la charge (3) de dépasser les seuils prédéfinis, le dispositif (1) comprenant en outre un circuit de déclenchement (13) pour mettre hors tension le transistor après une certaine durée de fonctionnement en mode linéaire.

5. Dispositif de protection selon l'une des revendications 1 à 4,
**caractérisé en ce que** l'organe de commande (A1) du circuit de limitation de courant (12) comprend un amplificateur (T3, T4) pour amplifier la mesure du courant délivré par la source (2) et commander l'élément de commutation (14), et **en ce que** le circuit de limitation de tension (15) est relié à l'amplificateur pour commander l'élément de commutation en cas de surtension.

6. Dispositif de protection selon l'une des revendications 3 à 5,
**caractérisé en ce que** le circuit de limitation de tension (15) comprend une diode Zener (Z4) montée de manière à fixer la tension appliquée à la charge à une valeur prédéterminée au début d'une surtension, le circuit de limitation de tension commandant élément de commutation (14) pour prendre le relais de la diode Zener et limiter la tension durant la fin de la surtension.

7. Dispositif de protection selon l'une des revendications 3 à 5,
**caractérisé en ce que** le circuit de limitation de tension (15) comprend une diode Zener (Z4) montée de manière à absorber la majeure partie des surtensions appliquées par la source, tandis que l'élément de commutation (14) est commandé par le circuit de limitation de tension (15) pour qu'il passe en mode linéaire.

8. Dispositif de protection selon l'une des revendications 3 à 7,
**caractérisé en ce que** le transistor (T_{M}) est choisi de manière à présenter des capacités parasites grille - source et grille - drain suffisantes pour qu'en cas de pointe d'énergie, le transistor soit commandé pour passer en mode linéaire grâce au courant injecté dans les capacités parasites.

9. Dispositif de protection selon l'une des revendications 1 à 8,
**caractérisé en ce qu'**il comprend en outre un circuit de limitation de puissance (11) conçu pour commander l'élément de commutation (14) pour empêcher la puissance délivrée par la source de dépasser un seuil de puissance prédéfini pendant une durée excédant une certaine valeur.

## Patentansprüche

1. Schutzvorrichtung (1) einer Spannungsquelle (2) und einer von der Spannungsquelle gespeisten Last (3), umfassend ein zwischen der Spannungsquelle und der Last angeordnetes und einem ein Organ (R1) zur Messung des von der Quelle gelieferten Stroms und ein Organ (A1) zur Steuerung des Schaltelements, um zu verhindern dass der Strom eine vordefinierte Schwelle überschreitet, umfassenden Strombegrenzungsschaltkreis (12) zugeordnetes Schaltelement (14), **dadurch gekennzeichnet, dass** sie außerdem einen Spannungsbegrenzungsschaltkreis (15) umfasst, der so konzipiert worden ist, dass er das Schaltelement (14) so steuert, dass es verhindert, dass die an die Last (3) gelieferte Spannung eine vordefinierte Spannungsschwelle überschreitet.

2. Schutzvorrichtung nach Anspruch 1, **dadurch gekennzeichnet, dass** der Spannungsbegrenzungsschaltkreis (15) Mittel zur Detektion der aus der Vorrichtung austretenden Spannungsvariationen umfasst, die dann in des Steuerungsorgan (A1) des Strombegrenzungsschaltkreises (12) zurückgeführt werden, um ebenfalls Funktionen zur Impedanzstabilisierung, Amortisierung des Qualitätsfaktors und zur Impedanzanpassung zwischen der Spannungsquelle und der Last sicherzustellen.

3. Schutzvorrichtung nach Anspruch 1 oder 2, **dadurch gekennzeichnet, dass** das Schaltelement (14) ein MOSFET (T_{M}) - Transistor ist , der in Serie mit der positiven Leitung (4) des Speisebusses, der die Spannungsquelle (2) mit der Last (3) verbindet und dessen Gatter vom Steuerorgan (A1), das auf den Transistor wie eine Stromquelle wirkt, gespeist wird, geschaltet ist.

4. Schutzvorrichtung nach Anspruch 3, **dadurch gekennzeichnet, dass** der Transistor (T_{M}) im Linearmodus gehalten wird, um zu verhindern, dass der Strom und die Spannung, die die Last beaufschlagen, die vordefinierten Schwellen überschreiten, wobei die Vorrichtung (1) außerdem Auslöserschaltkreis (13) umfasst, um den Transistor nach einer gewissen Betriebszeit im Linearmodus auszuschalten.

5. Schutzvorrichtung nach einem der Ansprüche 1 bis 4, **dadurch gekennzeichnet, dass** das Steuerorgan (A1) des Spannungsbegrenzungsschaltkreises (15) einen Verstärker (T3, T4) umfasst, um die Messung des von der Quelle (2) gelieferten Stroms zu verstärken und das Schaltelement (14) zu schalten und **dadurch** dass der Spannungsbegrenzungsschaltkreis (15) mit dem Verstärker verbunden ist um das Schaltelement im Falle eine Überspannung zu steuern.

6. Schutzvorrichtung nach einem der Ansprüche 3 bis 5, **dadurch gekennzeichnet, dass** der Spannungsbegrenzungsschaltkreis (15) eine Zenerdiode (Z4) umfasst, die so geschaltet ist, dass die Last beaufschlagende Spannung auf einen am Anfang einer Überspannung vorbestimmten Wert fixiert ist, wobei der Spannungsbegrenzungsschaltkreis das Schaltelement (14) steuert, um die Zenerdiode zu ersetzen und die Spannung am Ende der Überspannung zu begrenzen.

7. Schutzvorrichtung nach einem der Ansprüche 3 bis 5, **dadurch gekennzeichnet, dass** der Spannungsbegrenzungsschaltkreis (15) eine Zenerdiode (Z4) umfasst, die so geschaltet ist, dass der größte Teil der von der Quelle kommenden Überspannungen absorbiert wird, während das Schaltelement (14) vom Spannungsbegrenzungsschaltkreis (15) gesteuert wird, damit dieses in den Linearmodus übergeht.

8. Schutzvorrichtung nach einem der Ansprüche 3 bis 7, **dadurch gekennzeichnet, dass** der Transistor (T_{M}) so gewählt wird, dass er ausreichende Gatter - Quelle und Gatter - Drain - Streukapazitäten aufweist, damit der Transistor bei Energiespitzen so gesteuert wird, dass er dank des in die Streukapazitäten eingespeisten Stroms in den linearen Modus übergeht.

9. Schutzvorrichtung nach einem der Ansprüche 1 bis 8, **dadurch gekennzeichnet, dass** sie außerdem einen Leistungsbegrenzungsschaltkreis (11) umfasst, der so konzipiert ist, dass er das Schaltelement (14) so steuert, dass verhindert wird, dass die von der Quelle gelieferte Leistung eine vordefinierte Leistungsschwelle während einer einen gewissen Wert überschreitenden Zeitdauer überschreitet.

## Claims

1. A device (1) for protecting a voltage source (2) and a load (3) supplied by the voltage source, comprising a switching element (14) interposed between the voltage source and the load and associated with a current-limiting circuit (12), said current-limiting circuit including a unit (R1) for measuring the current supplied by the source and a control unit (A1) for controlling the switching element so that it prevents the current from exceeding a predefined current threshold,
**characterized in that** it further comprises a voltage-limiting circuit (15) designed to control the switching element (14) so that it prevents the voltage supplied to the load (3) from exceeding a predefined voltage threshold.

2. A protection device according to Claim 1,
**characterized in that** the voltage-limiting circuit (15) comprises means for detecting voltage variations at an output of the device which are fed back to the control unit (A1) of the current-limiting circuit (12), so as also to ensure functions of impedance stabilization, quality-factor damping and impedance matching between the voltage source and the load.

3. A protection device according to Claim 1 or 2,
**characterized in that** the switching element (14) comprises a MOSFET-type transistor (T_{M}) mounted in series on the positive line (4) of the power supply bus coupling the voltage source (2) to the load (3), said MOSFET-type transistor having a gate which is supplied with power by the control unit (A1), which acts on the transistor as a current source.

4. A protection device according to Claim 3,
**characterized in that** the transistor (T_{M}) is maintained in linear mode for preventing the current and voltage applied to the load (3) from exceeding the predefined thresholds, the device (1) further comprising a trigger circuit (13) for turning the transistor off after a given operating time in linear mode.

5. A protection device according to one of Claims 1 to 4,
**characterized in that** the control unit (A1) of the current-limiting circuit (12) comprises an amplifier (T3, T4) for amplifying the measurement of the current supplied by the source (2) and controlling the switching element (14), and **in that** the voltage-limiting circuit (15) is coupled to the amplifier for controlling the switching element in case of overvoltage.

6. A protection device according to one of Claims 3 to 5,
**characterized in that** the voltage-limiting circuit (15) comprises a Zener diode (Z4) mounted so as to clamp the voltage applied to the load to a predetermined value at the onset of an overvoltage, the voltage-limiting circuit controlling the switching element (14) so that it takes over from the Zener diode and limits the voltage at the end of the overvoltage.

7. A protection device according to one of Claims 3 to 5,
**characterized in that** the voltage-limiting circuit (15) comprises a Zener diode (Z4) mounted so as to absorb a major portion of overvoltages applied by the source, while the switching element (14) is controlled by the voltage-limiting circuit (15) so that it switches to linear mode.

8. A protection device according to one of Claims 3 to 7,
**characterized in that** the transistor (T_{M}) is chosen so as to have suffcient gate-source and gate-drain stray capacitances so that, in the event of an energy surge, the transistor is controlled so as to switch to linear mode as a result of current injected into the stray capacitances.

9. A protection device according to one of Claims 1 to 8,
**characterized in that** it further comprises a power-limiting circuit (11) designed to control the switching element (14) so as to prevent the power supplied by the source from exceeding a predefined power threshold during a time period exceeding a certain value.
